# FASCICULE DE BREVET EUROPEEN

(11) **EP 1 420 866 B1**
(45) Date de publication et mention de la délivrance du brevet: **23.09.2009**
(21) Numéro de dépôt: 02796316.4
(22) Date de dépôt: 27.08.2002
(51) Int. Cl.: B01D 3/14, B01D 1/00

(54) **DISPOSITIF A ENCEINTES MULTIPLES POUR L'EVAPORATION FRACTIONNEE ET LA SEPARATION D'UNE SOLUTION**
MEHRKAMMERVORRICHTUNG ZUR FRAKTIONIERTEN VERDAMPFUNG UND TRENNUNG EINER LÖSUNG
MULTIPLE-CHAMBER DEVICE FOR FRACTIONATED EVAPORATION AND SEPARATION OF A SOLUTION

(30) Priorité: 28.08.2001 FR 0111161
(43) Date de publication de la demande: 26.05.2004
(73) Titulaire: Qualiflow-Therm, 34935 Montpellier (FR)
(72) Inventeur: LAPORTE, Franck, F-38190 Bernin (FR); DUCRET, René-Pierre, F-38360 Sassenage (FR); JIMENEZ NICOLLIN, Carmen, Fr-38000 Grenoble (FR); DECAMS Jean-Manuel,Résidence François Rouan, 34000 Montpellier (FR); PIERRET, Benoît, F-38240 Meylan (FR); GUILLON, Hervé, F-34090 Montpellier (FR)
(74) Mandataire: Jouvray, Marie-Andrée
(86) Numéro de dépôt international: PCT/FR2002/002942
(87) Numéro de publication internationale: WO 2003/018161

(56) Documents cités:
- FR-A- 2 800 754
- GB-A- 1 224 057
- US-A- 4 740 298
- US-A- 4 824 792
- US-A- 5 446 263

## Description

### Domaine technique de l'invention

L'invention est relative à un dispositif d'évaporation d'une solution liquide à base de solvant et de composés ou solutés au sein d'une enveloppe renfermant :
- des zones d'évaporation à températures différentes qui correspondent aux températures d'évaporation respectives des n constituants de la solution,
- et des moyens de séparation des vapeurs du solvant et des composés.

### Etat de la technique

Des systèmes connus permettent d'envoyer dans la chambre uniquement le mélange des vapeurs issu de l'évaporation de la solution [vapeurs du solvant organique + vapeurs du/des précurseur(s) organométallique(s) CVD liquide(s) ou solide(s) dissous]. Pour des applications CVD, les vapeurs du solvant peuvent être gênantes.

Un autre dispositif connu concerne l'évaporation d'une solution composée d'un solvant et de solutés, au sein d'une même enveloppe dans deux zones d'évaporation distinctes, à températures différentes et avec séparation des vapeurs du solvant et des vapeurs des solutés. Une seule enveloppe d'évaporation est utilisée, ce qui rend très difficile voire impossible la séparation efficace des vapeurs, car il n'y a pas de perte de charge pour l'écoulement des gaz entre les deux zones d'évaporation.

### Objet de l'invention

L'objet de l'invention consiste à réaliser un dispositif d'évaporation fractionnée permettant une séparation efficace des constituants d'une solution à base de solvant et de composés ou solutés.

Le dispositif selon l'invention est caractérisé en ce que :
- les différentes zones d'évaporation sont compartimentées par des cloisons de séparation en plusieurs enceintes élémentaires distinctes permettant une évaporation fractionnée à travers des sorties générant une pluralité de flux séparés de vapeur spécifique à chaque constituant,
- la solution est injectée dans une première enceinte soumise à la température a plus basse, de manière à imbiber un élément mobile poreux, lequel traverse les différentes cloisons en étant successivement en contact avec lesdites enceintes chauffées à des températures croissantes,
- et des moyens d'injection d'un gaz vecteur neutre au voisinage des cloisons pour un contrôle des pertes de charge des écoulements de gaz entre les différentes enceintes.

Selon une caractéristique de l'invention, l'élément mobile poreux est en matière réfractaire qui conserve ses propriétés mécaniques jusqu'à la température maximum. II est constitué par un ressort à spires jointives, refermé sur lui-même pour former une boucle entraînée de façon cyclique par un moteur.

Selon une caractéristique de l'invention, chaque enceinte est équipée d'un bloc de chauffage, et d'une sortie par constituant. La pression dans chaque enceinte est contrôlée par un système de régulation de pression coopérant avec des jauges de lecture de pression à l'intérieur des enceintes, et des vannes à ouverture variable placées sur les sorties.

Selon une autre caractéristique de l'invention, l'enveloppe métallique est en acier inoxydable ou en aluminium, et les cloisons de séparation sont réalisées en matériau isolant thermique, ayant chacune un trou pour le passage de l'élément mobile. Dans la cas où l'élément mobile circule de façon cyclique, chaque cloison de séparation possède deux trous pour le passage de l'élément mobile (un pour l'aller, un autre pour le retour). Les moyens d'injection du gaz vecteur comportent des conduites d'arrivée pour répartir les flux gazeux entre les différentes enceintes, les pertes de charges dépendant de la largeur des cloisons et de la section différentielle correspondant au jeu entre le trou et l'élément mobile.

La paroi externe de l'enveloppe de l'évaporateur peut être dotée d'un échangeur de chaleur pour empêcher le transfert de chaleur entre les différentes enceintes.

Dans le cas d'une application CVD où la solution renferme un solvant et un précurseur, la sortie de la première enceinte chauffée à la température ambiante conduit le solvant évaporé vers un système de condensation, tandis que la sortie de la deuxième enceinte chauffée à une température supérieure envoie les précurseurs évaporés dans le réacteur CVD.

### Description sommaire des dessins

D'autres avantages et caractéristiques ressortiront plus clairement de la description qui va suivre d'un mode de réalisation de l'invention donné à titre d'exemple non limitatif, et représenté aux dessins annexés, dans lesquels:
- la figure 1 est une vue schématique du dispositif évaporateur-séparateur à enceintes multiples selon l'invention ;
- la figure 2 montre une vue partielle à échelle agrandie de la figure 1, représentant le système d'injection du gaz vecteur ;
- la figure 3A est une vue en coupe selon la ligne 3-3 de la figure 2, et la figure 3B montre une variante de la fig. 3A ;
- la figure 4 est une vue schématique du dispositif évaporateur-séparateur à deux enceintes adaptées à une application de CVD ;
- la figure 5 représente un schéma synoptique du dispositif de la figure 4 avec le système de régulation de pression ;
- la figure 6 montre une variante du dispositif de la figure 4 avec trois enceintes ;
- la figure 7 illustre une vue en coupe longitudinale d'un mode de réalisation préférentiel correspondant au schéma de la figure 4 ;
- la figure 8 est une vue en coupe selon la ligne 8-8 de la figure 7;
- les figures 9 et 10 illustrent des diagrammes représentant l'augmentation de la masse d'un substrat en fonction du temps lors de la décomposition en phase vapeur de deux précurseurs ;
- la figure 11 montre le diagramme de variation de la vitesse de croissance des couches par CVD en fonction du débit de solution.

### Description d'un mode de réalisation préférentiel.

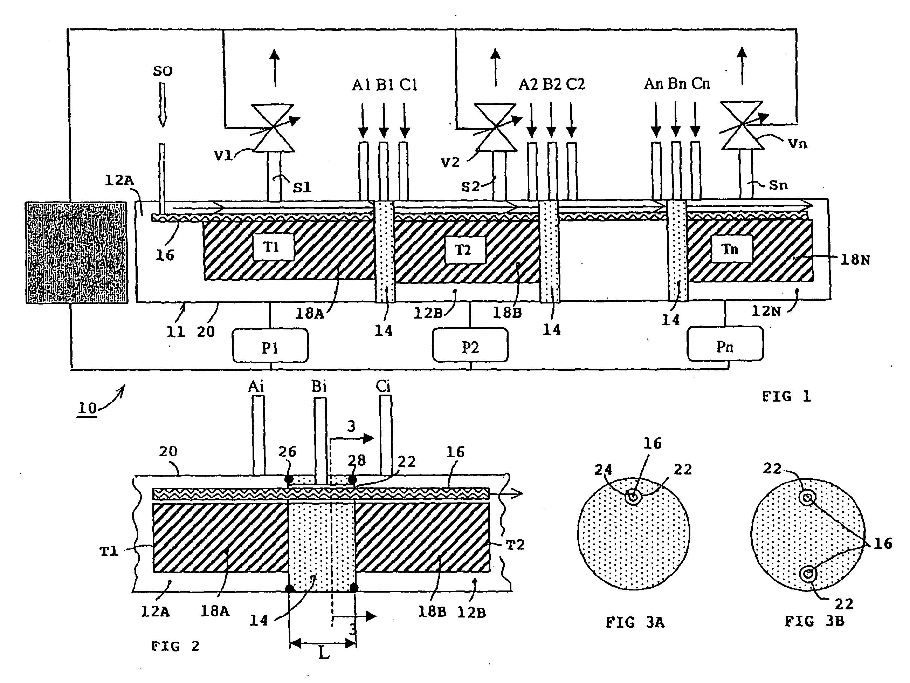

En référence aux figures 1 à 3A, un dispositif évaporateur-séparateur désigné par le repère général 10, comprend une enveloppe 11 compartimenté en plusieurs enceintes 12A, 12B... 12N élémentaires séparées les unes des autres par des cloisons 14 intermédiaires avec contrôle des pertes de charge pour l'écoulement des gaz. Il s'agit d'un système à zones d'évaporation et enceintes multiples, dans lequel la solution SO à évaporer est composée d'au moins un liquide (solvant constitué par un composé organique ou organométallique) et d'un ou plusieurs autres composés (solutés organiques ou organométalliques) solides ou liquides solubles dans le solvant.

La solution SO est injectée dans la première enceinte 12A du dispositif évaporateur-séparateur 10, laquelle se trouve dans une zone froide à température ambiante. La solution SO vient imbiber un élément mobile 16 poreux et réfractaire de grande surface, qui garde ses propriétés mécaniques jusqu'à une température maximum Tn. L'élément mobile 16 chargé de solution SO traverse ensuite successivement les cloisons 14 de séparation des enceintes 12A, 128... 12N en étant en contact avec n zones chauffées à des températures croissantes T1, T2,...Tn, qui sont les températures d'évaporation respectives des n constituants de la solution. Les températures T1, T2,...Tn successives sont obtenues par des blocs de chauffage 18A, 18B...18N disposés dans les enceintes 12A, 128... 12N correspondantes.

L'élément mobile 16 transite au plus prés des blocs de chauffage 18A, 18B...18N, et chaque zone d'évaporation des enceintes 12A, 12B... 12N comporte une sortie S1, S2,...Sn par constituant. Le dispositif évaporateur-séparateur 10 génère donc une pluralité de flux séparés de vapeurs.

La pression dans chaque zone d'évaporation doit être contrôlée. On peut utiliser à cet effet un système de régulation de pression qui comporte pour chaque zone d'évaporation, une jauge de lecture de pression P1, P2,...Pn installée sur l'enceinte 12A, 12B... 12N correspondante, et une vanne V1, V2,..Vn à ouverture variable placée sur la sortie S1, S2,..Sn correspondante. Un bloc de régulation R connecté électriquement aux vannes V1, V2,..Vn et aux différentes jauges P1, P2,...Pn, permet la transmission des ordres d'ouverture des vannes permettant d'atteindre les différentes consignes de pression.

Pour un fonctionnement optimum du dispositif, il faut réaliser une transition de température la plus abrupte possible entre chaque zone d'évaporation, et produire des pertes de charge pour les écoulements de gaz entre les zones (figures 2 et 3). Ces pertes de charge dépendent de la largeur L de la cloison 14, et de la section différentielle 24 correspondant au jeu de passage de l'élément mobile 16 dans la cloison 14. Il faut également éviter que le chauffage d'une zone n'influence la température de la ou des zones voisines, c'est à dire qu'il faut isoler thermiquement chaque zone de ses voisines. Les blocs de chauffage 18A, 18B...18N et la paroi 20 des enceintes 12A, 12B... 12N sont préférentiellement en acier inoxydable ou en aluminium.

Les moyens de chauffage peuvent être installés à l'intérieur des blocs de chauffage 18A, 18B...18N, ou à l'extérieur autour de la paroi 20 de l'enveloppe 11. Pour l'isolation thermique interne, les cloisons 14 intermédiaires sont réalisées en en matériau isolant thermique qui ne libère pas de particules, comme par exemple le téflon (PTFE). Les cloisons 14 sont munies d'au moins un trou 22 de communication pour laisser passer l'élément mobile 16 d'une zone à l'autre. Pour l'isolation thermique externe, on peut utiliser n'importe quel type de matériau isolant thermique. La section différentielle 24 correspond à la différence entre la section du trou 22 et celle de l'élément mobile 16. Sur la figure 3B, chaque cloison 14 est dotée de deux trous 22 pour une circulation cyclique en boucle de l'élément mobile 16.

Pour améliorer encore le profil thermique du dispositif évaporateur-séparateur, on peut installer entre chaque zone des échangeurs de chaleur (non représentés) fixés sur la paroi externe 20. Ces échangeurs de chaleur sont destinés à empêcher le transfert de chaleur d'une zone à l'autre via la paroi 20 métallique externe.

Pour améliorer la répartition des flux de vapeurs entre les différentes sorties S1, S2,...Sn, on injecte au niveau de chaque cloison 14 de séparation, un gaz vecteur neutre (azote, argon, hélium...). Chaque ligne d'injection de gaz vecteur est équipée d'un système de régulation de débit. L'injection (figure 2) peut se faire par trois conduites d'arrivées distinctes Ai, Bi et Ci selon les combinaisons suivantes : Ai, Bi, Ci, Ai + Bi, Ai + Ci, Bi + Ci ou Ai + Bi + Ci. Pour forcer le passage du gaz vecteur d'une zone à l'autre à travers la section différentielle 24, il est préférable de minimiser l'espace entre les cloisons 14 et la face interne de la paroi 20. Une paire de joints d'étanchéité 26, 28 annulaires permet de rendre cet espace nul.

L'introduction de la solution SO dans l'enceinte 12A doit être contrôlée, notamment grâce à l'utilisation par exemple des systèmes d'injection liquide suivants: injecteur automobile, débitmètre régulateur massique pour liquide, seringue, micro-pompes doseuses, buse de pulvérisation ultrasonore... L'injection de la solution SO peut se faire en régime pulsé ou continu.

Dans une variante du dispositif, il n'y a que p zones d'évaporation et sorties de vapeur associées (avec p < n) alors que la solution SO contient n constituants à évaporer, car certains constituants peuvent avoir des températures d'évaporation proches, et s'évaporent donc dans la même zone. Ce dispositif est avantageux pour certaines applications destinées à faire circuler un mélange de vapeurs à travers une ou plusieurs des sorties.

Dans une autre variante du dispositif, il y a plusieurs éléments mobiles 16 poreux et réfractaires alimentés par des systèmes d'injection de liquide indépendants.

Dans le cas où les éléments mobiles 16 sont alimentés par une solution de même composition, ce dispositif peut être utilisé avantageusement pour obtenir des flux de vapeurs importants sur chaque sortie de vapeur.

Dans le cas où les éléments mobiles 16 sont alimentés par des solutions de composition différente, ce dispositif peut être utilisé avantageusement :
- Soit pour envoyer par la même sortie de vapeur au moins deux composés qui ne sont pas miscibles en solution (réaction en solution, insolubilité...).
- Soit pour envoyer par la même sortie de vapeur un ou plusieurs composés avec un débit de vapeur constant (c'est à dire un débit de solution constant à concentration donnée), et un ou plusieurs composés avec un débit de vapeur variable (c'est à dire un débit de solution variable à concentration donnée).

Quelques exemples d'utilisations de la présente invention sont donnés ci-après :

### Exemple 1: Séparation et purification de composés formant un mélange liquide

Deux ou plusieurs composés volatils (des isomères par exemple) peuvent être formés en solution, et cristallisent en même temps à partir de cette solution. La cristallisation n'est donc pas un moyen de séparation de ces composés. Une sublimation fractionnée du mélange des composés solides issus de la cristallisation n'est pas toujours possible. En effet, les purifications par sublimation se font la piupart du temps sous pression assez basse (0,1 à 0,001 mbar), ce qui rapproche ou resserre les températures de vaporisation des composés en empêchant leur séparation efficace. La présente invention permet de travailler à des pressions plus élevées (1 mbar jusqu'à pression atmosphérique) pour l'évaporation de solides, ce qui permet de conserver des différences suffisantes dans les températures d'évaporation pour réaliser une séparation efficace.

### Exemple 2: Dispositif pour évaporer des précurseurs CVD en solution sans envoyer de vapeurs du solvant dans l'enceinte de dépôt chimique en phase vapeur.

Dans des applications CVD, une solution [solvant organique + précurseur(s) organométallique(s) est injectée dans un évaporateur., et permet l'évaporation reproductible et stable de composés à faible tension de vapeur et instables thermiquement. En effet, le composé à évaporer se retrouve dans l'évaporateur déposé sur l'élément mobile 16 sur une grande surface (favorable à l'évaporation) et reste à température ambiante tant qu'il n'est pas injecté dans l'évaporateur.

Cependant, les systèmes connus permettent d'envoyer dans la chambre uniquement le mélange des vapeurs issu de l'évaporation de la solution [vapeurs du solvant organique + vapeurs du/des précurseur(s) organométallique(s) C V D liquide(s) ou solide(s) dissous]. Pour des applications CVD, le dispositif selon la présente invention permet d'envoyer sélectivement dans le réacteur CVD uniquement les vapeurs du/des précurseur(s) organométallique(s) CVD liquide(s) ou solide(s). Les vapeurs du solvant qui peuvent être gênantes, sont envoyées sur une sortie qui n'est pas connectée au réacteur CVD.

La présence de solvant organique (par définition riche en carbone) dans la chambre CVD est gênante dans le cas où l'on veut obtenir des dépôts exempts de carbone. Elle est également gênante dans le cas de dépôts à pression réduites et température élevée sous atmosphère oxydante, car elle peut conduire à la formation de carbonates indésirables (cas par exemple de dépôts contenant des alcalino-terreux et/ou des lanthanides). La présence du solvant dans la chambre CVD pour des dépôts sous atmosphère oxydante (O₂ O₃, N₂0, H₂0...) et à pression proche de la pression atmosphérique, peut amener à la création d'un régime de décomposition thermique explosif dans la chambre CVD (similaire à ce qui se passe dans un moteur à explosion).

Un mode de réalisation préférentielle de la présente invention pour des applications de l'exemple 2 est détaillé ci-après.

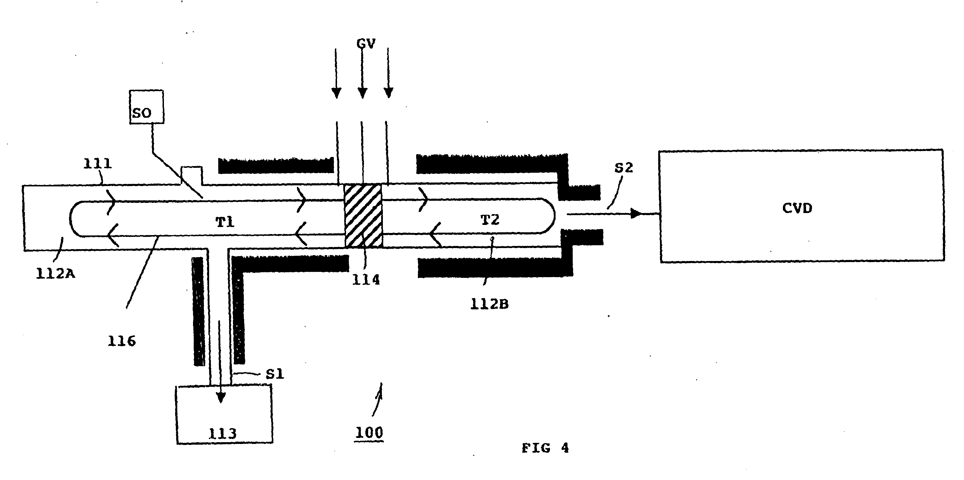

La figure 4 présente un schéma de fonctionnement général du dispositif évaporateur-séparateur pour des applications CVD.

Le dispositif 100 est constitué d'une enveloppe 111 longitudinale subdivisée en deux enceintes 112A, 112B chauffées à deux températures différentes qui correspondent à l'évaporation du solvant organique et du ou des précurseur(s) organométallique(s) CVD liquide(s) ou solide(s). Les deux enceintes 112A, 112B sont séparés par une cloison 114 interne en matériau isolant thermique. Le précurseur ou les précurseur(s) organométallique(s) CVD liquide(s) ou solide(s) sont dissous dans un liquide porteur (solvant organique), et la solution SO est introduite dans l'enceinte 112A de façon contrôlée sur l'élément mobile 116 qui circule de façon cyclique à l'intérieur de l'enveloppe 111.

L'élément mobile 116 chargé de solution SO ses déplace à travers les deux enceintes 112A, 112B. Dans la première enceinte 112A chauffée à une température T1, le solvant est évaporé et dirigé vers une première sortie S1. Les vapeurs du solvant peuvent être ainsi récupérées en utilisant un système de condensation 113 ou piège froid, dont les parois internes sont à une température inférieure à T1. La deuxième enceinte 112A est chauffée à une température T2, supérieure à T1, où le ou les précurseurs sont évaporés et envoyés à travers une ligne chauffée à T2 vers la sortie S2 raccordée à un réacteur CVD.

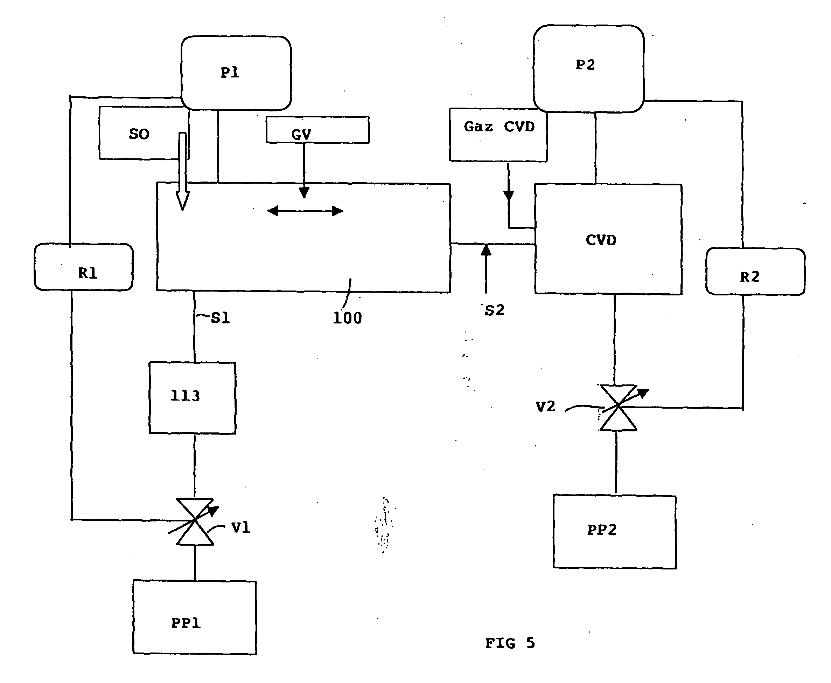

En référence à la figure 5, le système de condensation 113 pour le solvant et le réacteur CVD doivent être équipés d'un système de pompage PP1, PP2 ou d'un évent qui permet de créer à travers les sorties S1 et S2, un flux de vapeurs du dispositif évaporateur-séparateur 100 vers le système de condensation 113 et vers le réacteur CVD.

Le dispositif évaporateur-séparateur 100 peut travailler sous vide ou à pression atmosphérique. Dans le cas de pressions inférieures à la pression atmosphérique, on a besoin de deux systèmes de régulation de pression R1, R2, l'un R1 étant affecté au dispositif d'évaporation 100, et l'autre R2 pour l'enceinte de dépôt du réacteur CVD. La pression dans la première enceinte 112A (à T1) peut être la même ou différente de la pression dans le réacteur CVD. Pour diriger les vapeurs du solvant et des précurseurs vers les sorties S1 et S2 respectives, on utilise une ou plusieurs lignes GV de gaz vecteur. Le dispositif est équipé d'un moyen d'entraînement et de guidage de l'élément mobile 116 permettant son mouvement cyclique dans l'évaporateur 100.

L'utilisation de plusieurs éléments mobiles 116 en parallèle alimentés par des lignes liquides différentes est nécessaire dans le cas de précurseurs CVD non miscibles en solution. L'évaporation des précurseurs se fait au niveau d'une même sortie à partir de plusieurs éléments mobiles, le mélange des précurseurs ne se fait alors que dans la phase vapeur (cas de dépôts CVD à éléments multiples). L'utilisation d'un élément mobile 116 par précurseur permet également de déposer des couches à éléments multiples à gradient de composition. Au cours de la phase de dépôt pour certains précurseurs, on fait varier le débit de solution (qui a une concentration constante) indépendamment des débits des solutions des autres précurseurs. Ces variations de débits peuvent être régulières et progressives ou par paliers successifs.

Dans certains procédés CVD où l'on dépose des matériaux multi-métalliques, il n'est pas possible d'évaporer les-précurseurs à la même température car certains se décomposent thermiquement à la température d'évaporation des autres.

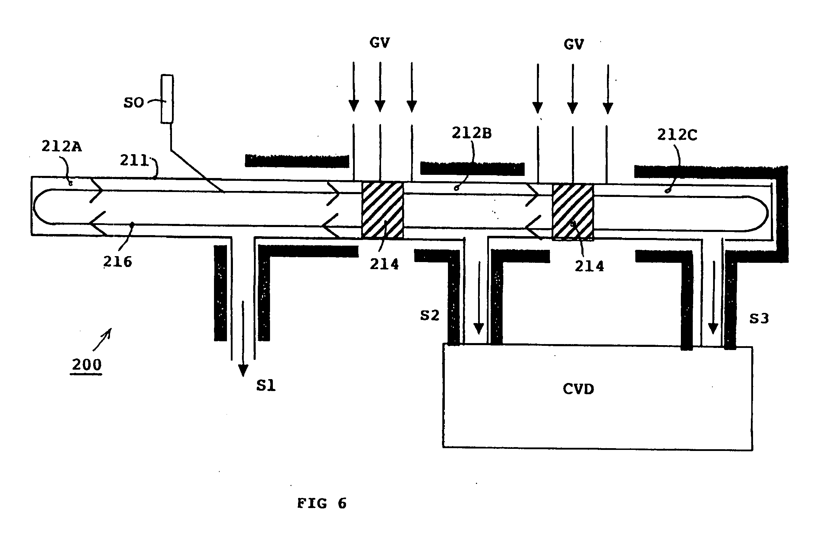

Sur la figure 6, un évaporateur 200 possède trois enceintes 212A, 212B, 212C séparées par des cloisons 214, et se trouvant aux températures T1, T2, T3. Dans le cas le plus défavorable, s'il y a n précurseurs CVD, il faut utiliser un évaporateur avec n+1 sorties (une sortie pour le solvant et n pour les précurseurs CVD). Les n sorties des précurseurs CVD sont connectées au même réacteur CVD par n lignes distinctes chauffées respectivement à T1, T2, T3,...,Tn qui sont les températures d'évaporation des n précurseurs.

Dans le cas de l'utilisation de précurseurs CVD qui sont des adduits (complexes organométalliques moléculaires covalents avec une ou plusieurs bases de Lewis solvatées de façon neutre sur le métal), il peut être souhaitable d'éliminer en plus du solvant, la ou les bases de Lewis (si celle si sont organiques, c'est à dire carbonées) et de n'envoyer dans le réacteur CVD que les complexes organométalliques moléculaires covalents désolvatés (débarrassés des bases de Lewis).

Dans ce cas, il faut utiliser l'évaporateur 200 de la figure 6. La première enceinte 212A de l'enveloppe 211 sert pour l'évaporation du solvant, une deuxième enceinte 212B pour la désolvatation des adduits, et une troisième enceinte 212C pour l'évaporation des précurseurs CVD.

Dans le cas de l'utilisation de plusieurs adduits, plusieurs enceintes peuvent être utilisées pour la désolvatation des adduits et pour l'évaporation des précurseurs CVD suivant les températures de désolvatation des adduits et les températures d'évaporation des précurseurs.

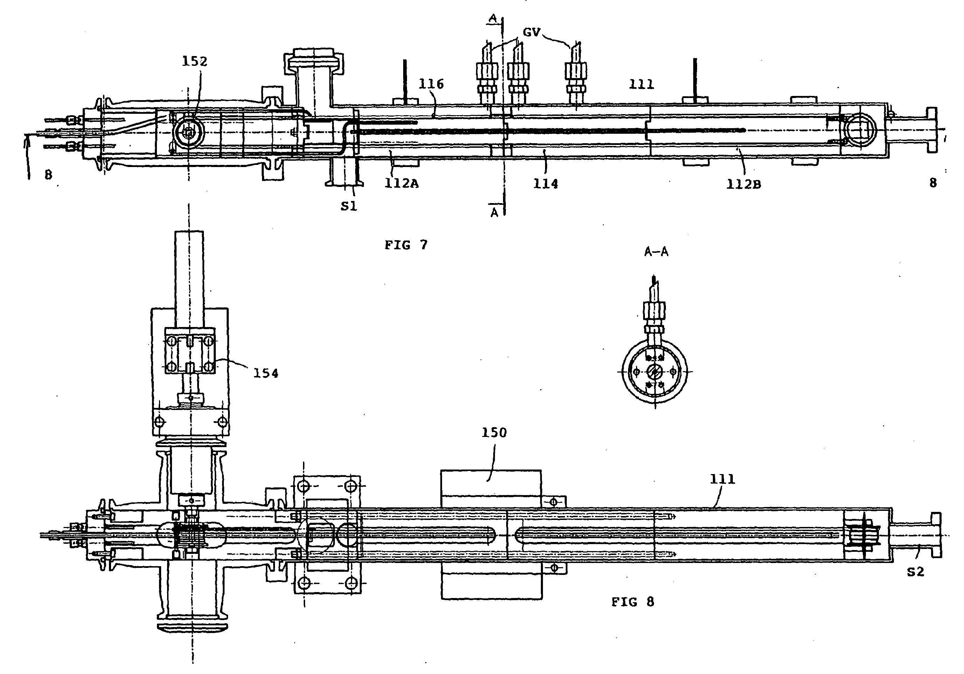

Les figures 7 et 8 montrent un mode de réalisation préférentielle du dispositif de la figure 4. Les deux enceintes 112A, 112B sont chauffées par des colliers chauffants externes (non figurés) installés autour de l'enveloppe 111 ou par des cartouches chauffantes (non figurées) placées à l'intérieur des enceintes 112A, 112B. Un échangeur de chaleur 150 est installé entre les enceintes 112A, 112B à l'extérieur de l'enveloppe 111. Il est constitué d'un élément dans un métal bon conducteur thermique directement fixé sur la paroi de l'évaporateur, d'un radiateur fixé sur le précédent élément et d'un ventilateur fixé sur le radiateur.

L'élément mobile 116 est un ressort à spires jointives, lequel est refermé sur lui même sous forme d'une boucle qui garde ses propriétés élastiques jusqu'à 350°C. ii est entraînée de façon cyclique dans l'évaporateur via une roulette 152 actionnée par un moteur 154 extérieur. L'axe du moteur 154 pénètre dans l'enceinte 112A de l'évaporateur. On peut également utiliser un moteur à couplage magnétique, ceci évite de faire pénétrer un axe dans l'évaporateur.

La solution SO injectée se dépose entre les spires du ressort de l'élément mobile 116 sous forme d'un film liquide mince. Pour augmenter la capacité d'absorption du ressort on peut le garnir à l'intérieur d'un matériau facile à imbiber de liquide (fibres de verre par exemple). Le système comporte une cloison 114 en matériau isolant thermique en PTFE entre les deux zones d'évaporation. Trois conduites d'arrivées de gaz vecteur GV se situent dans le voisinage de la cloison 114.

Un exemple de procédé CVD mis en oeuvre grâce à ce dispositif est la synthèse de couches supraconductrices d'YBa₂Cu₃O₇, à partir des précurseurs organométalliques [Y(thd)₃(L_{B})ₓ] (L_{B} = base de Lewis, 1,10-phénantroline par exemple), Cu(thd)₂ et [Ba(thd)₂(L_{B})_{y}] (L_{B} = base de Lewis, triglyme ou tétraglyme, par exemple) dissous dans du xylène (ortho, méta ou para), du mesitylène ou du diglyme. Ces solvants présentent des pressions de vapeur de l'ordre de 10 Torr ou plus à 20°C. Pour cette application, les qualités supraconductrices du dépôt sont fortement dépendantes de la concentration de carbone dans le réacteur CVD, et il faut donc éviter d'envoyer les vapeurs du solvant organique dans le réacteur CVD.

Ce dispositif d'évaporation a été testé pour l'évaporation de ces précurseurs sur une microbalance. Pour ces tests, l'enceinte de la microbalance chauffée à température de dépôt CVD a fait office de réacteur CVD, et était reliée à la sortie des vapeurs des précurseurs CVD de l'évaporateur. Le substrat dans l'enceinte de la microbalance est suspendu à la potence d'une balance, et pesé en temps réel et en continu. Ceci permet de mesurer l'augmentation de la masse du substrat au cours du temps.

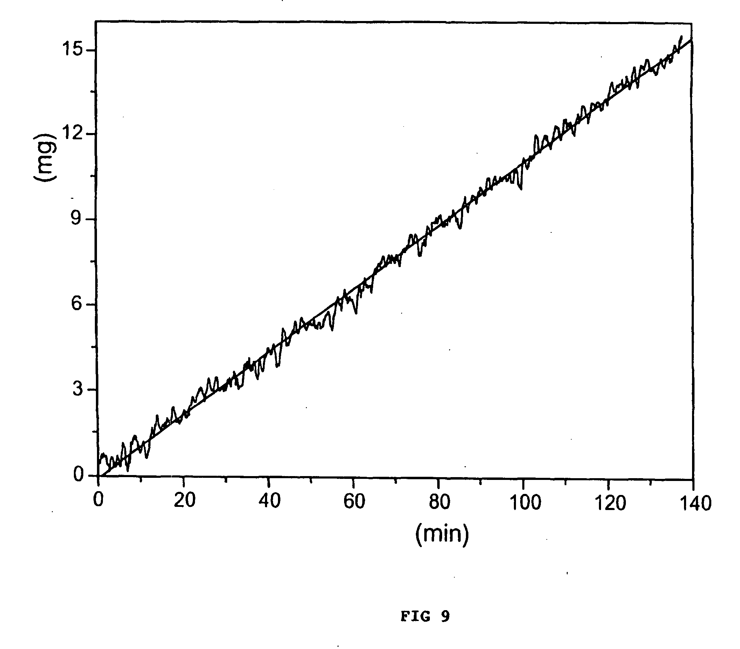

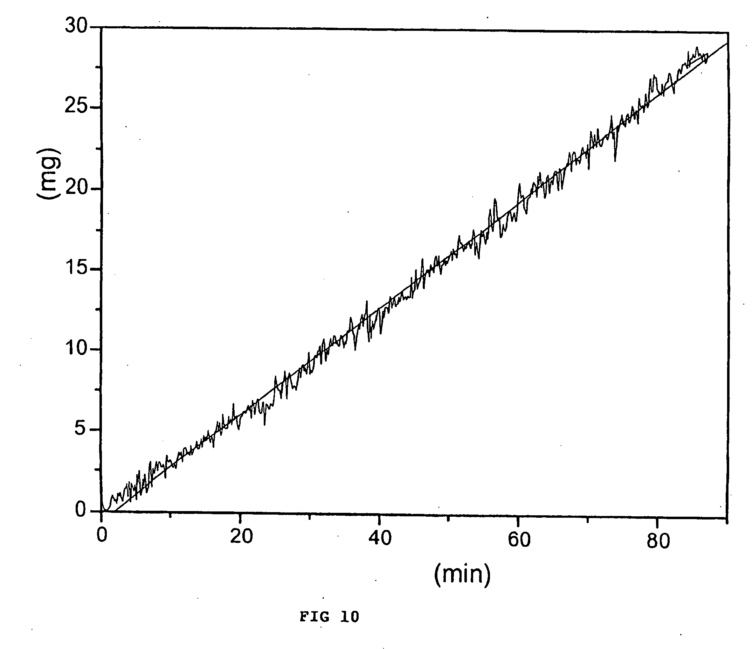

Cette augmentation résulte de la décomposition des vapeurs de précurseurs issues de l'évaporateur. Avec ce système, on a démontré que l'évaporateur délivre un débit de vapeur de précurseurs stable au cours du temps, pour un débit de solution constant (figures 9 et 10 illustrant l'augmentation linéaire de la masse du substrat en fonction du temps).

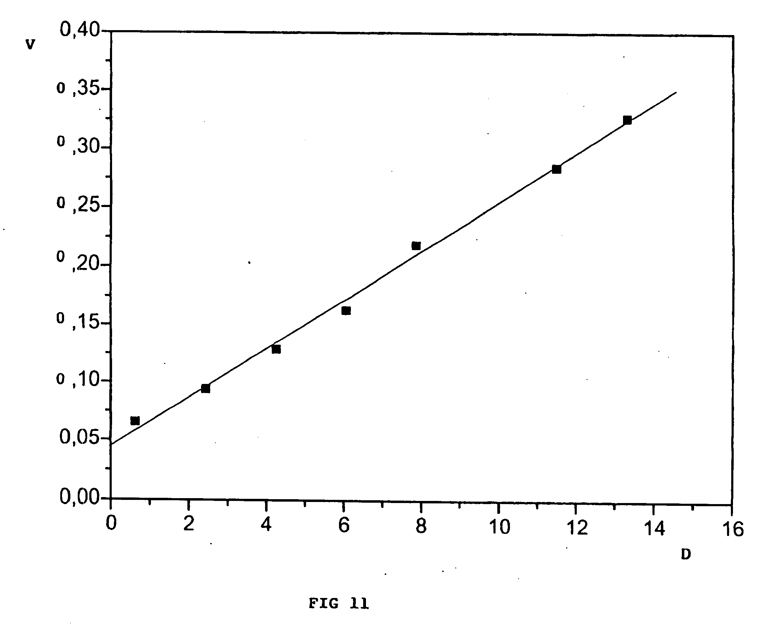

On a également démontré que la vitesse de croissance des couches par CVD augmente linéairement en fonction du débit de solution pour une solution de concentration constante (figure 11)

### ABBREVIATIONS :

thd = 2,2,6,6-tétraméthyl-3,5-heptanedionate
triglyme = 2,5,8,11-tétraoxadodécane
tétraglyme = 2,5,8,11,14-pentaoxapentadécane
m-xylène = méta-xylène
M =mol/l

### LEGENDES DES FIGURES 9, 10 et 11

Figure 9 : Augmentation de la masse (en mg) du substrat en fonction du temps (en minutes) pour l'évaporation du Cu à partir d'une solution 0,1 M de Cu(thd)₂ dans le m-xylène. La courbe a été obtenue grâce à une microbalance connectée au dispositif évaporateur.
Figure 10 : Augmentation de la masse (en mg) du substrat en fonction du temps (en minutes) lors de la décomposition en phase vapeur de [Ba(thd)₂(tétraglyme)] évaporé à partir d'une solution 0,1 M de [Ba(thd)₂(tétraglyme)] dans du m-xylène. La courbe a été obtenue grâce à une microbalance connectée au dispositif évaporateur.
Figure 11 : Vitesse v de dépôt chimique en phase vapeur sur un substrat en fonction du débit d de liquide introduit dans l'évaporateur pour une solution 0,1M de [Ba(thd)₂(tétraglyme)] dans du m-xylène.

## Revendications

1. Dispositif d'évaporation (10, 100, 200) d'une solution (SO) liquide à base de solvant et de composés ou solutés au sein d'une enveloppe (11, 111, 211) renfermant :
- des zones d'évaporation à températures (T1, T2, ..Tn), différentes qui correspondent aux températures d'évaporation respectives des n constituants de la solution (SO),
- et des moyens de séparation des vapeurs du solvant et des composés,
- les différentes zones d'évaporation sont compartimentées par des cloisons (14, 114, 214) de séparation en plusieurs enceintes (12A, 12B, ...12N ; 112A, 112B ; 212A, 212B, 212C) élémentaires distinctes permettant une évaporation fractionnée à travers des sorties (S1, S2, Sn) générant une pluralité de flux séparés de vapeur spécifique à chaque constituant,
- la solution (SO) est injectée dans une première enceinte (12A, 112A, 212A) soumise à la température (T1) la plus basse, de manière à imbiber un élément mobile (16, 116, 216) poreux dudit dispositif lequel traverse les différentes cloisons (14, 114, 214) en étant successivement en contact avec lesdites enceintes chauffées à des températures (T1, T2,...Tn) croissantes,
- et le dispositif comprend en outre des moyens d'injection d'un gaz vecteur (GV) neutre au voisinage des cloisons (14, 114, 214) pour un contrôle des pertes de charge des écoulements de gaz entre les différentes enceintes.

2. Dispositif d'évaporation selon la revendication 1, **caractérisé en ce que** l'élément mobile (16, 116, 216) poreux est en matière réfractaire qui conserve ses propriétés mécaniques jusqu'à la température maximum (Tn).

3. Dispositif d'évaporation selon la revendication 2, **caractérisé en ce que** l'élément mobile (116) est constitué par un ressort à spires jointives, refermé sur lui-même pour former une boucle entraînée de façon cyclique par un moteur (154).

4. Dispositif d'évaporation selon la revendication 1, **caractérisé en ce que** chaque enceinte (12A, 12B,...12N) est équipée d'un bloc de chauffage (18A, 18B, ...18N) et d'une sortie (S1, S2...Sn) par constituant.

5. Dispositif d'évaporation selon la revendication 4, **caractérisé en ce que** la pression dans chaque enceinte (12A, 12B,...12N) est contrôlée par un système de régulation de pression (R, R1, R2) coopérant avec des jauges de lecture de pression (P1, P2...Pn) à l'intérieur des enceintes, et des vannes (V1, V2, ...Vn) à ouverture variable placées sur les sorties (S1, S2...Sn).

6. Dispositif d'évaporation selon la revendication 1, **caractérisé en ce que** l'enveloppe (11, 111, 211) métallique est en acier inoxydable ou en aluminium, et les cloisons (14, 114, 214) de séparation sont réalisées en matériau isolant thermique, ayant chacune un trou (22) pour le passage de l'élément mobile (16, 116,216).

7. Dispositif d'évaporation selon la revendication 6, **caractérisé en ce que** les moyens d'injection du gaz vecteur (GV) comportent des conduites d'arrivée (A1, B2, C1 ; A2, B2, C2 ; An Bn Cn ; GV) pour répartir les flux gazeux entre les différentes enceintes, les pertes de charges dépendant de la largeur des cloisons (14, 114, 214), et de la section différentielle (24) correspondant au jeu entre le trou (22) et l'élément mobile (16, 116, 216).

8. Dispositif d'évaporation selon la revendication 1, **caractérisé en ce que** la paroi externe de l'enveloppe (11) est dotée d'un échangeur de chaleur (150) pour empêcher le transfert de chaleur entre les différentes enceintes.

9. Dispositif d'évaporation selon la revendication 1, destiné à une application CVD, où la solution (SO) renferme un solvant et un précurseur, **caractérisé en ce que** la sortie (S1) de la première enceinte (112A) chauffée à la température (T1) conduit le solvant évaporé vers un système de condensation (113), tandis que la sortie (S2) de la deuxième enceinte (112B) chauffée à la température (T2) envoie les précurseurs évaporés dans le réacteur CVD.

10. Dispositif d'évaporation selon la revendication 9, **caractérisé en ce qu'**une troisième enceinte (212C) chauffée à une température (T3) supérieure à la température (T2) est reliée au réacteur (CVD) par une sortie (S3) dans le cas où la solution (SO) renferme plus d'un précurseur.

11. Dispositif d'évaporation selon la revendication 9, **caractérisé en ce que** le système de condensation (113) et le réacteur (CVD) sont équipés d'un système de pompage (PP1, PP2) pour extraire les flux de vapeurs hors des enceintes.

## Claims

1. Evaporation device (10, 100, 200) of a liquid solution (SO) based on solvent and compounds or solutes inside an enclosure (11, 111, 211) containing:
- evaporation zones at different temperatures (T1, T2, ...Tn) which correspond to the respective evaporation temperatures of the n constituents of the solution (SO),
- and means for separating the vapors of the solvent and of the compounds,
- the different evaporation zones are separated by separating partitions (14, 114, 214) into several distinct elementary chambers (12A, 12B, ...12N; 112A, 112B; 212A, 212B, 212C) enabling fractionated evaporation via outlets (S1, S2, Sn) generating a plurality of separate flows of vapor specific to each constituent,
- the solution (SO) is injected into a first chamber (12A, 112A, 212A) subjected to the lowest temperature (T1) so as to impregnate a porous mobile element (16, 116, 216) of said device, that passes through the different partitions (14, 114, 214) being successively in contact with said chambers heated to increasing temperatures (T1, T2, ...Tn),
- and the device further comprises means for injecting a neutral carrier gas (GV) in the vicinity of the partitions (14, 114, 214) for control of the pressure losses of the gas flows between the different chambers.

2. Evaporation device according to claim 1, **characterized in that** the porous mobile element (16, 116, 216) is made of refractory material which keeps its mechanical properties up to the maximum temperature (Tn).

3. Evaporation device according to claim 2, **characterized in that** the mobile element (116) is formed by a coiled spiral spring closed on itself to form a loop driven cyclically by a motor (154).

4. Evaporation device according to claim 1, **characterized in that** each chamber (12A, 12B, ...12N) is equipped with a heating unit (18A, 18B, ...18N) and with an outlet (S1, S2, ...Sn) per constituent.

5. Evaporation device according to claim 4, **characterized in that** the pressure in each chamber (12A, 12B, ...12N) is controlled by a pressure control system (R, R1, R2) operating in conjunction with pressure reading gauges (P1, P2, ...Pn) inside the chambers, and variable opening valves (V1, V2, ...Vn) placed on the outlets (S1, S2, ...Sn).

6. Evaporation device according to claim 1, **characterized in that** the metal enclosure (11, 111, 211) is made of stainless steel or aluminum, and the separating partitions (14, 114, 214) are made of thermal insulating material each having a hole (22) for the mobile element (16, 116, 216) to pass through.

7. Evaporation device according to claim 6, **characterized in that** the means for injecting the carrier gas (GV) comprise inlet ducts (A1, B1, C1; A2, B2, C2; An, Bn, Cn; GV) to distribute the gas flows between the different chambers, the pressure losses depending on the width of the partitions (14, 114, 214) and on the differential section (24) corresponding to the clearance between the hole (22) and the mobile element (16, 116, 216).

8. Evaporation device according to claim 1, **characterized in that** the external wall of the enclosure (11) is equipped with a heat exchanger (150) to prevent heat transfer between the different chambers.

9. Evaporation device according to claim 1, designed for a CVD application, where the solution (SO) contains a solvent and a precursor, **characterized in that** the outlet (S1) of the first chamber (112A) heated to the temperature (T1) conducts the evaporated solvent to a condensation system (113), whereas the outlet (S2) of the second chamber (112B) heated to the temperature (T2) sends the evaporated precursors to the CVD reactor.

10. Evaporation device according to claim 9, **characterized in that** a third chamber (212C) heated to a temperature (T3) higher than the temperature (T2) is connected to the reactor (CVD) by an outlet (S3) in the case where the solution (SO) contains more than one precursor.

11. Evaporation device according to claim 9, **characterized in that** the condensation system (113) and the reactor (CVD) are equipped with a pumping system (PP1, PP2) to extract the vapor flows from the chambers.

## Patentansprüche

1. Vorrichtung zum Verdampfen (10, 100, 200) einer flüssigen Lösung (SO) auf Basis von Lösungsmitteln und Verbindungen oder Soluten innerhalb einer Hülle (11, 111, 211); die einschließt:
- Verdampfungszonen mit unterschiedlichen Temperaturen (T1, T2, ..Tn), die den jeweiligen Verdampfungstemperaturen der n Bestandteile der Lösung (SO) entsprechen,
- und Mittel zum Trennen der Dämpfe des Lösungsmittels und der Verbindungen,
- die einzelnen Verdampfungszonen sind durch Trennwände (14, 14, 214) in mehrere unterschiedliche Einzelkammern (12A, 12B, ...12N ; 112A, 112B ; 12A, 212B, 212C) unterteilt, die ein Verdampfen durch Auslässe (S1, S2, Sn) erlauben, wodurch eine Mehrzahl getrennter Dampfströme erzeugt wird, die spezifisch für jeden Bestandteil sind,
- die Lösung (SO) wird in eine erste Kammer (12A, 112A, 212A) eingeleitet, in der die niedrigste Temperatur (T1) herrscht, um ein poröses, bewegliches Element (16, 116, 216) der Vorrichtung zu durchtränken, das durch die einzelnen Trennwände geführt ist (14, 114, 214) und dabei nacheinander in Kontakt mit den Kammern kommt, die auf zunehmende Temperaturen (T1, T2,...Tn) erwärmt sind,
- und die Vorrichtung umfasst ferner Mittel zum Einleiten eines neutralen Vektorgases (GV) nahe den Trennwänden (14, 114, 214) zur Kontrolle der Druckverluste der Gasströme zwischen den einzelnen Kammern.

2. Verdampfungsvorrichtung nach Anspruch 1, **dadurch gekennzeichnet, dass** das poröse bewegliche Element (16, 116, 216) aus feuerfestem Material besteht, das seine mechanischen Eigenschaften bis zur Höchsttemperatur (Tn) behält.

3. Verdampfungsvorrichtung nach Anspruch 2, **dadurch gekennzeichnet, dass** das bewegliche Element (116) von einer Feder mit nebeneinanderliegenden Windungen gebildet wird, die in sich geschlossen ist und so eine Spirale bildet, die zyklisch von einem Motor (154) angetrieben wird.

4. Verdampfungsvorrichtung nach Anspruch 1, **dadurch gekennzeichnet, dass** jede Kammer (12A, 128....12N) mit einer Heizeinheit (18A, 18B, ...18N) und einem Auslass (S1, S2...Sn) pro Bestandteil versehen ist.

5. Verdampfungsvorrichtung nach Anspruch 4, **dadurch gekennzeichnet, dass** der Druck in jeder Kammer (12A, 12B....12N) mittels eines Druckregelungssystems (R, R1, R2) kontrolliert wird, das mit Drucklesemessgebern (P1, P2...Pn) innerhalb der Kammern und Ventilen (V1, V2, ...Vn) mit variabler Öffnung zusammenwirkt, die an den Auslässen angeordnet sind (S1, S2...Sn).

6. Verdampfungsvorrichtung nach Anspruch 1, **dadurch gekennzeichnet, dass** die Metallhülle (11, 111, 211) aus Inoxstahl oder Aluminium besteht und die Trennwände (14, 114, 214) aus wärmeisolierendem Material bestehen und jeweils eine Öffnung (22) zum Durchführen des beweglichen Elements (16, 116,216)haben.

7. Verdampfungsvorrichtung nach Anspruch 6, **dadurch gekennzeichnet, dass** die Vorrichtungen zum Einleiten des Vektorgases (GV) Zufuhrleitungen (A1, B2, C1 ; A2, B2, C2 ; An Bn Cn ; GV) zum Verteilen der Gasströme zwischen den einzelnen Kammern umfassen, wobei die Druckverluste von der Breite der Trennwände (14, 114, 214) und vom Differenzialquerschnitt (24) abhängen, der dem Spiel zwischen der Öffnung (22) und dem beweglichen Element (16, 116, 216) entspricht.

8. Verdampfungsvorrichtung nach Anspruch 1, **dadurch gekennzeichnet, dass** die Außenwand der Hülle (11) mit einem Wärmetauscher (150) versehen ist, um einen Wärmeübergang zwischen den einzelnen Kammern zu verhindern.

9. Verdampfungsvorrichtung nach Anspruch 1, bestimmt für ein CVD-Verfahren, bei der die Lösung (SO) ein Lösungsmittel und einen Zwischenstoff enthält, **dadurch gekennzeichnet, dass** der Auslass (S1) der ersten Kammer (112A), die auf die Temperatur (T1) aufgeheizt ist, das verdampfte Lösungsmittel zu einem Kondensationssystem (113) leitet, während der Auslass (S2) der zweiten, auf die Temperatur (T2) aufgeheizten Kammer (112B) die verdampften Zwischenstoffe in den CVD-Reaktor leitet.

10. Verdampfungsvorrichtung nach Anspruch 9, **dadurch gekennzeichnet, dass** eine dritte Kammer (212C), die auf eine Temperatur (T3) aufgeheizt ist, die über der Temperatur (T2) liegt, mit dem Reaktor (CVD) durch einen Auslass (S3) verbunden ist in dem Fall, dass die Lösung (SO) mehr als einen Zwischenstoff enthält.

11. Verdampfungsvorrichtung nach Anspruch 9, **dadurch gekennzeichnet, dass** das Kondensationssystem (113) und der Reaktor (CVD) mit einem Pumpsystem (PP1, PP2) zum Abführen der Dampfströme aus den Kammern versehen sind.
